Europäisches Patentamt

European Patent Office

Office européen des brevets

(19)

(11) Publication number: **0 142 359**
**B1**

(12) # EUROPEAN PATENT SPECIFICATION

(45) Date of publication of patent specification: **19.10.88**

(51) Int. Cl.⁴: **B 01 J 47/02,** B 01 J 49/00,
B 01 D 15/02

(21) Application number: **84307787.6**

(22) Date of filing: **09.11.84**

(54) **Countercurrent ion exchange and adsorption processes.**

(30) Priority: **11.11.83 GB 8330229**

(43) Date of publication of application:
**22.05.85 Bulletin 85/21**

(45) Publication of the grant of the patent:
**19.10.88 Bulletin 88/42**

(84) Designated Contracting States:
**AT BE CH DE FR GB IT LI LU NL SE**

(56) References cited:
**CH-A- 495 773**
**FR-A-2 443 283**
**GB-A- 849 979**
**GB-A-1 318 102**
**GB-A-1 367 085**

(73) Proprietor: **Rohm and Haas Company**
**Independence Mall West**
**Philadelphia, Pennsylvania 19105 (US)**

(72) Inventor: **Prunac, Alain Denis Louis**
**Les Micocouliers Avenue Sidi Brahim**
**F-06130 Grasse (FR)**
Inventor: **Dobias, Josef Borivoj**
**Haigermoos 7**
**A-5120 St. Pantaleon (AT)**

(74) Representative: **Angell, David Whilton et al**
**ROHM AND HAAS (UK) LTD.**
**European Operations Patent Department**
**Lennig House 2 Mason's Avenue**
**Croydon CR9 3NB (GB)**

Courier Press, Leamington Spa, England.

# 0 142 359

**Description**

This invention is concerned with countercurrent ion exchange and adsorption processes in which loading is carried out by upward liquid flow and regeneration by downward liquid flow.

Countercurrent ion exchange processes wherein the liquid to be treated flows upward through a column of ion exchange resin which is subsequently regenerated by downward regenerant flow and downward flow of regenerant rinse liquid are known. It is generally desirable in such processes that the resin which is subjected to the lowest level of exhaustion in the loading stage of the loading/regeneration cycle is the first to contact influent regenerant since this preserves the maximum effectiveness of that section of the bed which removes the last traces of undesirable ions from the liquid to be treated (the polishing section).

It is also desirable to operate such beds in a compacted state during both regeneration and loading especially towards the end of the loading stage. This provides little difficulty in downflow regeneration because the combination of the regenerant liquid flow and settling of the ion exchange resin beads under gravity produces the necessary degree of compactness. In the upflow loading stage however the combination of resin volume and density, column volume and liquid flow rate must be such as to hold the resin in a compacted state. However strong electrolyte resins especially strongly basic anion exchange resins shrink as loading progresses and the increasing free column volume which results as loading progresses acts contrary to the desirable bed compactness. It would be advantageous therefore to be able to adjust the amount of resin in the bed to help to offset this shrinkage during loading.

During cyclical processing the resin becomes polluted both with fragmented resin beads, which tend to concentrate at the top of the bed, and with solid contaminants introduced in the liquid to be treated. The latter tend to accumulate at the bottom of the bed. It is known to wash the resin in an expanded state, preferably expanded by about 100% by volume, usually 75 to 125% by volume, by an upflow wash to remove these contaminants. This washing is known as backwashing but in many cases, where all of the resin is backwashed at the same time, the loading/regeneration cycle has to be interrupted to allow backwashing to be carried out. Obviously the space required for 100% bed expansion is also incompatible with the efficient upflow operation of a compact bed.

It would clearly be advantageous therefore to devise a process in which any necessary backwashing can be completed without interrupting the loading/regeneration cycle and which furthermore allows for the most contaminated parts of the resin bed, that is to say the resin at or near the ends of the bed, to be selectively backwashed more frequently than the portion of resin in the middle of the bed while, nevertheless, allowing the resin in the middle of the bed to be backwashed as necessary.

The process of FR—A—24 43 283 involves downflow loading and upflow regeneration with the top of the resin fed being removed for backwashing. The bottom end of the bed is backwashed in the loading/regeneration column itself. This backwashing of the bottom end of the bed (i.e. the polishing section) necessarily interrupts the normal loading/regeneration cycle.

British Patent 1 433 666 discloses a countercurrent ion exchange process wherein the whole resin is backwashed in segments by removing a part of the resin from the bottom of the bed, backwashing it in a separate column and re-inserting the backwashed resin at the top of the bed. This process however, by transferring to the polishing end of the bed resin which has been contacted with untreated water has the disadvantage that high volumes of regenerant have to be used to reform an adequately regenerated polishing section. Furthermore, since only that part of the bed near the bottom when backwashing begins is actually backwashed the fragmented beads which tend to work up through the bed may not be adequately removed.

British Patent 1 504 384 recognizes the disadvantage of destroying the polishing section in the above patent and attempts to overcome it by segmentally backwashing in a separate column, all of the resin in each backwashing step and returning each segement of the backwashed resin to the top of the bed so that the resin is returned, at the end of the backwash cycle when it has all been washed, to substantially its pre-backwashed position in the bed. However this has the major disadvantage that the loading/regeneration cycle has to be seriously interrupted for backwashing.

European Patent 30697 operates the loading, regeneration and backwashing steps in a column split into upper and lower parts by a resin barrier through which liquid can flow and which has a by-pass line through which resin is transferred to and from the bottom of the upper bed into the lower section so that the necessary free space for backwashing can be arranged in the upper bed and the resin can be returned to the upper bed before loading and, during loading, to help to offset the resin shrinkage. However this has the disadvantage that the loading/regeneration cycle has to be interrupted for resin transfer and backwashing. Also the transferred resin cannot be effectively backwashed without having such a large amount of free space in the split column that the column is uneconomic to operate and the resin in the bottom compartment will remain fluidized during loading so that the resin in this compartment is less efficiently utilized.

We have now found a process wherein not only can all of the resin be backwashed without interrupting the loading/regeneration cycle but moreover the most heavily contaminated portions of the bed (the ends) can be selectively and therefore more frequently backwashed.

Furthermore the resin can be reintroduced into the column in such a manner as to offset resin

2

shrinkage during exhaustion. Finally our process allows the backwashing to be carried out without unacceptable disturbance of the polishing section.

According to the invention there is provided an ion exchange or adsorption process for liquid treatment involving cyclical upflow loading and downflow regeneration stages applied to a compact bed of strong electrolyte ion exchange resin or of polymeric adsorbent wherein, without interrupting the cycle of loading and regeneration stages, part of the resin at or near one or other end of the bed is transferred, when in a regenerated state, into a separate container wherein the resin is backwashed and the backwashed resin is then returned to the top of the bed before, and/or to the bottom of the bed during, the loading stage, resin removed from the bottom of the bed being returned to the bottom of the bed and resin removed from the top of the bed being returned to the top and/or bottom of the bed.

Thus the process of the invention allows for several different backwashing treatments to be carried out.

Firstly, a portion of resin may be removed from the top of the bed to the separate backwashing column wherein it is backwashed and from which it is returned to the top of the bed. This is to remove fines, that is to say resin fragments, which tend to accumulate near the top of the bed. In this case the resin removal will be carried out with the liquid which is used to rinse regenerant from the bed between the regeneration and loading stages. There is time to backwash this resin and return it to the top of the bed from where it has been removed before the next loading cycle commences.

In the case of ion exchange treatment of water, the resin would generally be backwashed and returned using treated water, usually deionised water. However in the case of other ion exchange treatments, such as sugar solution treatment, or in adsorption, these processes would be effected using separately provided deionised water.

In a second embodiment of the invention resin removed from the top of the bed may be returned to the bottom of the bed. In this case resin removal may be effected by using the rinse liquid or by the first upflowing loading liquid so that backwashing can be effected and the resin returned to the bottom of the column during the loading cycle and while there is still time for this resin, which is of course in regenerated condition, to play an effective role in the liquid treatment. This embodiment does not preserve the polishing section of the column in the same way as the abovementioned first embodiment. Nevertheless, provided the amount of resin removed is judiciously chosen and removal is effected at or before an early enough stage in the loading cycle, the portion of resin immediately below the removed resin can form a sufficiently effective polishing section. The purpose of this embodiment is to enable the whole of the bed to be segmentally backwashed. The backwashing and resin return liquids would be as described above for the first embodiment.

In one preferred embodiment resin is taken from the top of the bed and some is returned to the top before loading begins and the remainder is returned to the bottom during loading. This enables sequential backwash of the whole bed to be achieved together with more frequent fines removal from the top of the bed while maintaining a compact bed during loading.

In another embodiment of the invention resin is removed from the bottom of the bed and returned to the bottom of the bed. Removal will be conveniently effected with rinse liquid and return of the backwashed resin can conveniently be effected, once again using the backwashing liquid, which is either treated liquid in the case of ion exchange treatment or is deionised water separately provided as described above. Return of resin can take place at the beginning of the loading cycle, as soon as the upflowing loading liquid supports the bed to the point where space for the re-introduction is available, and further during the loading cycle as the resin in the column shrinks. This embodiment of the invention once again has the advantage that the resin re-introduced at the bottom of the column at the beginning of and during loading is regenerated resin which can play its full part in treatment of the loading liquid.

In most commercial ion exchange processes of the kind to which the invention is directed typical times for the various stage in the cycle are as follows:

| | |
|---|---|
| loading | 4 to 20 hours; |
| regeneration | 20 to 60 minutes; |
| slow and fast rinses | 45 to 90 minutes; and |
| backwashing | 10 to 20 minutes. |

Consideration of these times will make it clear that resin taken from the column early in the rinse stage can comfortably be backwashed and returned to the column before the loading stage is commenced. Similarly resin taken from the column at the beginning of the loading stage can comfortably be backwashed and returned to the column while there is still enough time for the resin to play its full part in the treatment of liquid in the loading stage. Therefore the process of this invention can be operated without interrrupting the normal loading/regeneration and rinse sequence and the resin is not under-utilized in the process.

Washing the section of the resin at the top of the column tends to be carried out relatively frequently because the fines which accumulate at the top of the column tend to escape through and block the liquid exit nozzles. In many cases this has meant that an inert material to block fines has been added to the top of such compact beds. This use of inert material was largely an attempt to avoid the need to stop the loading/regeneration cycle in order to backwash the bed. The present invention therefore also may be used to avoid the incorporation of this inert material, with the obvious economy in column size and material usage.

3

It is envisaged, using the process of the invention on a commercial basis, that backwashing resin from the top or bottom of the bed and returning it to the place from which it was taken will be carried out relatively frequently, depending on the particular conditions in the column, that is to say the rate of production of fines, and the degree of contamination of the treatment liquid inflow.

Removal of the resin from the top of the bed and reintroduction at the bottom in order to cycle the whole bed through the backwashing process is envisaged to be carried out rather less frequently since the process will generally not allow much build-up of contaminants in the middle section of the bed.

Usually at most 30% of the resin in the bed by volume will be removed at any one time for backwashing and more usually at most 20%. Sometimes as little as 5% by volume of the resin will be removed but more usually at least 10% will be removed. In the most typical circumstances therefore from 15 to 25% of the resin will be removed for backwashing at any one time.

The process of the present invention can be applied to a bed of resin in one compartment of a multi-compartment column. For example it is known in ion exchange to treat liquids in cation or anion exchange columns having two or more compartments separated by intermediate nozzle plates through which liquid, but not resin, may pass. Each compartment may be filled with the same strong or weak electrolyte resin or different compartments may be filled with different resins. The "bed" of strong resin to which this invention may be applied may be any such individual compartment in which a compact bed of strong electrolyte resin is to be operated or any combination of adjacent compartments which together are to be operated as such a bed. In the latter case provision may be made for resin to pass from one adjacent compartment to another containing the same resin to enable the cyclical washing embodiment of the invention to be carried out.

In some cases a column may be split into a number of compartments of which some are to be operated as compact beds of strong electrolyte resin and others are not. In this case the process of the invention may be applied to the compact bed(s) of resin but not to the others. Frequently for example a column has an upper compartment filled with a strong electrolyte resin and a lower compartment containing weak electrolyte resin. The former may be operated according to this invention but the latter cannot because weak electrolyte resin swells during loading so space must be left to accommodate this swelling. Such a weak electrolyte resin bed therefore operates at least during the initial part of the loading cycle as a partially fluidized bed. Yet again, a common design involves an upper compartment filled with strong resin and a lower compartment only partially filled with the same resin, the resin in the upper compartment to be operated as a compact bed and that in the lower compartment to be operated as a fluidized, or partially fluidized, bed. Again the upper compartment may be operated according to this invention but the lower compartment will not. It must be clearly understood in this case that the lower compartment cannot operate as the backwash column for resin from the upper compartment or play any role in such backwash. Such a process would be similar to that of European Patent 30697 and, as described above, would involve the overwelming disadvantage of substantial dislocation of the liquid treatment cycle while backwashing of the resin takes place.

Similarly the invention may be applied to columns containing compact beds of strong electrolyte resin to be operated in series in which case the various options for resin movement parallel those for adjacent compartments filled with strong electrolyte resin as described above.

As mentioned above, the process of the invention may be applied to the treatment, by ion exchange or adsorption of a variety of fluids. Most frequently of course the deionisation of water is involved. However the purification treatment of other streams, for example sugar-containing liquids may be operated according to this invention.

The process of the invention can be operated using any strong acid or strong base gel or macroreticular resin currently available and no limitation on strong electrolyte resins which might be developed in the future is contemplated. Similarly, as to adsorbants, any crosslinked polymeric macroreticular adsorbent may be used.

For the purposes of this invention by "compact" when referring to the bed we mean a bed which at least during the last 70% of the loading time is at least 80%, usually 80—98%, by volume full of resin.

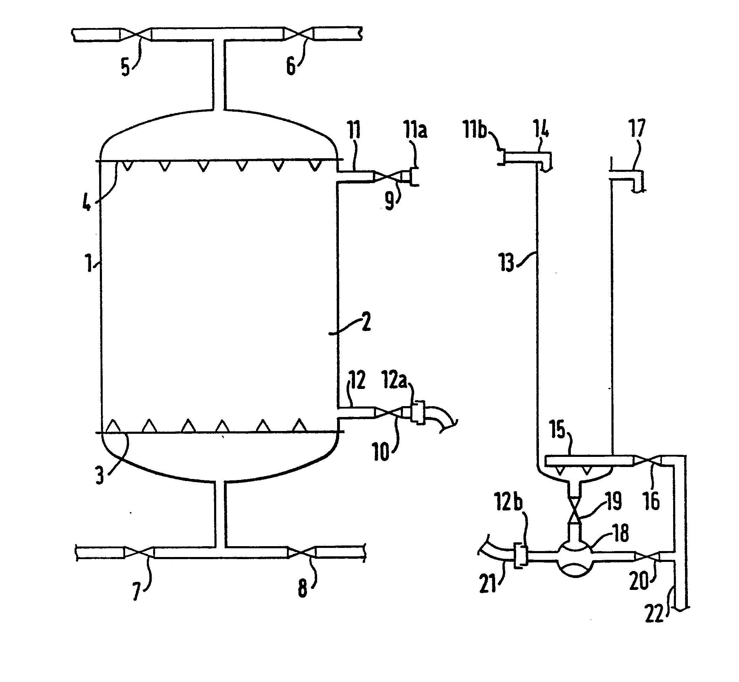

One preferred embodiment of the invention can be carried out in equipment as schematically represented in Figure 1.

In Figure 1 an ion exchange column (1) is shown as a one-chamber column containing ion exchange resin (2). The column has a lower nozzle plate (3) and an upper nozzle plate (4).

The liquid inlet/outlet piping at the lower end of the column comprises an inlet valved pipe (7) for liquid to be treated and outlet valved pipe (8) for the regeneration and rinse liquid. The liquid inlet/outlet piping at the upper end comprises outlet valved pipe (6) for the treated liquid solution and inlet valved pipe (5) for regenerant and rinse liquids. Two resin-transfer-lines (11) and (12) are equipped with valves (9) and (10) respectively and terminate in fast fitting connections (11a) and (12a).

A separate open backwash vessel (13) large enough to provide for adequate expansion of resin to be transferred is connectable via inlet 14 (which is equipped with a fast fitting connection 11b) and through liquid injector device (18) (with fast fitting connection 12b) to the column 1. To this end flexible hoses (such as that depicted as 21) are used.

A liquid injector (18) is fitted with valves (19) and (20), the former leading to the bottom of the vessel (13) and the latter leading to a liquid distributor (15), to ensure an even distribution of backwash liquid, via corresponding valve (16).

An overflow (17) for backwash liquid is provided near the top of vessel 13.

Inlet 22 is for backwashing liquid.

When the exchanger column (1) is constructed as multiple chamber column, it is internally separated by 3 or more nozzle plates into 2 or more chambers of the same or different volume. Piping at the top nozzle plate and bottom nozzle plate are identical to the one-chamber column depicted in Figure 1 but each chamber is equipped with two resin-transfer-openings as described for the single chamber of the column in Figure 1.

The external equipment of such a multiple chamber column can correspond with that for one-chamber column, the useful volume of the open backwash vessel 13 being adjusted to provide adequate expansion of the volume of resin to be transferred from the biggest chamber.

Some preferred embodiments of the invention will now be described, for the purposes of illustration only, in the following Examples which also contain details of comparative experiments given for the purposes of illustrating the technical advantages achieved for the embodiments in question. In the Examples and Comparative Tests, $l_r$ means litres of resin and BV means bed volume.

Example 1

An ion exchange unit constructed according to Figure 1 was used.

Its internal diameter is 200 mm, the cylindrical jacket height of the chamber between the two nozzle plates is 2000 mm and it was filled with a total of 60 l of strong acid cation exchanger in Na-Form subsequently changed into H-Form by treatment with 200 g HCl/l of resin.

At this stage the resin had swollen so 2 l were removed via outlet 12 and valve 10 to the backwash column (13) using rinse liquid and there held in reserve for retransfer to the bottom of the resin bed during the second half of the subsequent loading stage when the resin had shrunk.

For loading, water containing 5.5 mval/l Ca, 1.5 mval/l Mg, 1.0 mval/l Na, 4.0 mval/l $HCO_3$ at a temperature of 21.5°C was used. Throughput was 1000 l/h which corresponds to a linear flow velocity of 31.8 m/h and an exhaustion flow rate of 16.7 l/l of resin/hour. The loading phase was ended as soon as the conductivity in the outlet stream of the cation exchanger, measured after subsequent treatment with a strongly basic anion exchanger in the OH Form had reached max. 10 µS/cm.

During upflow loading valves 7 and 6 were open the rest remaining closed.

During regeneration acidic regenerant and subsequently deionised rinse water were passed through the resin bed downflow via valves 5 and 8.

After 0.9 BV rinse water had passed, valve 8 was closed and 9 opened until 6 l of resin had been transferred into the open backwash vessel 13 via a flexible pipe 21 and the inlet 14. Valve 9 was then closed and 8 reopened to finish the rinse.

By opening valve 16 the resin was backwashed (with deionised water) via backwash liquid distributor 15 and fines were removed. Valves 16 and 5 were then closed and after re-arranging the flexible pipe 21, valves 9, 19 and 20 were opened.

Most of the backwashed resin was then transferred back near the end of the rinse stage to the exchanger column 1 via liquid injector 18. After this had been completed all valves were closed, and the installation was put back into service.

The remaining resin in the open backwash vessel 13 was transferred into column 1 during the second half of the subsequent loading cycle. The flexible pipe 21 was connected to valve 10 and valves 10, 19 and 20 were opened.

Comparative Test A

To compare the performance of the process of the invention to a known counter-current process with upflow loading, downflow regeneration and backwash-possibilities in the column itself, 60 l of resin of the same type were filled into a column of 200 mm internal diameter having 2 equal sized chambers with a cylindrical jacket height of 1300 mm.

The upper chamber was filled completely with about 38 l resin while the lower one is filled 54% by volume with about 22 l resin. After the regeneration and loading phase, in which the same process parameters as in Example 1 were used, the backwash was carried out in the upper chamber. To obtain the necessary backwash space a part of the resin quantity from the upper chamber was transferred to the lower chamber using special equipment.

The lower chamber was full, the upper had free room of 550 mm height. After backwashing, regeneration was applied in known manner. This comparison was carried out twice once (a) at the same regeneration level as Example 1, the second time (b) to reproduce the useful resin capacity as in Example 1.

The following Table I shows the results of the loading cycle, following backwash of the resin:

TABLE I

| | Example 1 | Comparative Test A | |
| | | (a) | (b) |
|---|---|---|---|
| Water throughput l | 8947 | 7441 | 8951 |
| Useful capacity val/l | 1.19 | 0.99 | 1.19 |
| Regeneration level gHCl/l$_r$ | 61 | 61 | 90 |
| Pure water quality average conductivity µS/cm | 1.4 | 3.6 | 1.7 |
| Interruption of working cycle for backwashing | no | yes | yes |
| Rinse water demand l/l$_r$ | 1.5 | 1.9 | 1.9 |

From Table I it can be seen that:
—the column size used in the known process had to be increased by the necessary backwash space which means extra cost;
—with the process of the invention: the useful capacity was not affected by the backwash of the resins whereas with the known process either the useful capacity decreased, depending on the raw water composition or regeneration had needed more regenerant;
—backwashing did not influence the pure water quality with the process of the invention whereas pure water quality was worse after backwashing in the known processes;
—the backwash was performed in the process of the invention without interruption of the loading cycle
—the rinse water consumption was lower in the process of the invention since the necessary backwash space, used in the known processes negatively influenced the efficiency of the rinse.

Example 2
An ion exchange unit constructed according to Figure 1 was used.
Its internal diameter was 200 mm, the cylindrical jacket height of the chamber between the two nozzle plates was 2000 mm and it was filled with a total of 60 l of strong basic anion exchanger type II in Cl-Form. Resin ionic form was changed into OH-form by treatment with 200 g NaOH/l of resin.
At this stage the resin had swollen so 2.5 l were removed from the bottom of the bed to the backwash column using rinse liquid and returned as described in Example 1.
For loading, decationised water containing 2.6 mval/l $SO_4$, 1.4 mval/l Cl, 0.4 mval/l $CO_2$, 0.4 mval/l $SiO_2$ at a temperature of 21.5°C was used. Throughput was 1000 l/h which corresponds to a linear flow velocity of 31.8 m/h and an exhaustion flow rate of 16.7 l/l resin/hour. The loading phase was ended as soon as the silicate ($SiO_2$) in the outlet stream of the anion exchanger had reached 0.1 mg/l.
The exchanger was loaded upflow during the exhaustion phase, that means valve 7 and 6 were open the rest remained closed.
During the generation phase, caustic soda regenerant as well as rinse water were passed through the resin bed downflow via valves 5 and 8.
After 1.8 BV rinse water had passed, valve 8 was closed and 9 opened until 6 l of resin had been transferred into the open backwash vessel 13 via the flexible pipe 21 and the inlet 14. Valve 9 was then closed and 8 reopened to finish the rinse.
By opening valve 16 the resin was backwashed with deionised water via backwash liquid distributor 15 and freed from fines. Valves 16 and 6 were closed and after re-arranging the flexible pipe 21, valves 9, 19 and 20 were opened.
Most of the backwashed resin was then transferred back near the end of the rinse stage to the exchanger column 1 via liquid injector 18. After this step had been taken all valves were closed, the installation was put back into service.
The resin remaining in the open backwash vessel 13 was transferred into column 1 during the second half of the following loading cycle. The flexible pipe 21 was connected to valve 10 and valves 10, 19 and 20 were opened.

Comparative Test B
To compare the performance in Example 2 to the known counter-current process with upflow loading, downflow regeneration and backwash possibilities in the column itself, 60 l of resin of the same type were filled into a column of 200 mm internal diameter having 2 equal sized chambers with cylindrical jacket height of 1300 mm.
The upper chamber was filled completely with about 38 l resin while the lower one was filled 54% with about 22 l resin. After the regeneration and loading phase using the same process parameters as in Example 2, the backwash was carried out in the upper chamber. To obtain the necessary backwash space a part of the resin from the upper chamber was transferred to the lower chamber using special equipment. Two runs were carried out as in Comparative Test A. Table II shows the results of the loading cycle following the backwash of the resin.

TABLE II

| | Example 2 | Comparative Test B | |
| --- | --- | --- | --- |
| | | (a) | (b) |
| Water throughput l | 8525 | 7238 | 8532 |
| Useful capacity val/l$_r$ | 0.68 | 0.58 | 0.68 |
| Regeneration level gNaOH/l$_r$ | 35 | 35 | 80 |
| Pure water quality average silica value ($SiO_2$) mg/l | 0.03 | 0.07 | 0.05 |
| Interruption of working cycle for backwashing | no | yes | yes |
| Rinse water demand l/l$_r$ | 2.5 | 2.9 | 2.9 |

This Table evidences the same advantages as were evidenced in Table I for Example 1.

Example 3

An ion exchange unit constructed according to Figure 1 was used.

Its internal diameter was 200 mm, the cylindrical jacket height of the chamber between the two nozzles plates was 2000 mm and it was completely filled with a total of 60 l of strong acid cation exchanger in Na-Form. Resin ionic form was changed into H-Form by treatment with 200 g HCl/l of resin. As in Example 1 2 l of resin was then removed to the backwash column and subsequently returned.

For loading, water containing 1.2 mval/l Ca, 1.8 mval/l Mg, 5.0 mval/l Na, 4.0 mval/l $HCO_3$, 1.0 mg/l suspended solids at a temperature of 21.5°C was used. Throughput was 700 l/h which corresponds to a linear flow velocity of 22.3 m/h and an exhaustion flow rate of 11.7 l/l of resin/hour. The loading phase was ended as soon as the conductivity in the outlet stream of the cation exchanger, measured after subsequent treatment with a strongly basic anion exchanger in the OH Form, had reached max. 10 µS/cm.

The exchanger was upflow loaded during the exhaustion phase, that means valve 7 and 6 were open, the rest remaining closed.

During the regeneration phase, the acidic regenerant, as well as the subsequent rinse water were passed through the resin bed downflow via valves 5 and 8.

After 1.4 BV rinse water had passed via, at the end of the rinse stage, valve 8 was closed and 10 opened until 10 l of resin had been transferred into the open backwash vessel 13, via the flexible pipe 21 and the inlet 14. After that all valves were closed, the installation was put back into service.

By opening valve 16 the resin was backwashed with deionised water via backwash liquid distributor 15 and freed from suspended solids. Valve 16 was then closed and the flexible pipe was connected to the liquid injector 18.

Valves 19, 20 and 10 were opened and most of the backwashed resin was transferred back to the exchanger column 1 via liquid injector 18 the loading stage having been begun while backwashing was being carried out. Now, valves 19, 20 and 10 were closed again. During the second half of the loading stage the remaining resin quantity in the open backwash-vessel was re-transferred in the same manner to the column 1.

Comparative Test C

For a comparison of the performance, the process of Example 3 was compared with the known processes: (a) a countercurrent process with upflow loading, downflow regeneration and with backwashing of exhausted resin in an external backwash vessel and (b) a countercurrent process with upflow loading, downflow regeneration and backwashing in the column itself.

(a) For the first comparative process a column of 200 mm internal diameter and a cylindrical jacket height of 2100 mm was filled with 60 l of resin of the same type as in Example 3.

The same process parameters as in Example 3 were applied. The pressure drop in the resin bed, caused by the existance of suspended solids in the raw water, required an external backwash of resin after two loading cycles. Therefore about 30 l of exhausted resin was transferred to the backwash vessel via resin transfer lines (situated directly below the upper nozzle tray) and after backwashing it was re-transferred via the same resin transfer lines to the column. For the subsequent regeneration a higher acid quantity was necessary.

(b) For the second comparative process 60 l of resin of the same type as in Example 3 were filled into a column of 200 mm internal diameter having 2 equal sized chambers with a total cylindrical jacket height of 2600 mm.

The upper chamber was filled completely with about 38 l resin while the lower one was filled 54% with about 22 l resin. After the exhaustion phase, in which the same process parameters as in the invented process are used, the backwash was carried out in the lower chamber before every regeneration.

After backwashing, regeneration was applied in known manner.

The following Table III shows the results of 10 cycles for the Example 3 and the two Comparative Test runs.

TABLE III

| | Example 3 | Comparative Test C | |
| | | (a) | (b) |
| --- | --- | --- | --- |
| Throughput l | 9330 | 9375 | 9375 |
| Useful capacity val/l$_r$ | 1.24 | 1.24 | 1.24 |
| Regeneration level g HCl/l$_r$ | 62 | 90 | 75 |
| Purewater quality average conductivity µS/cm | 1.4 | 6.8 | 2.2 |
| Pressure drop min. bar | 0.65 | 0.65 | 0.5 |
| Pressure drop max. bar | 1.5 | 1.9 | 1.0 |
| Interruption of working cycle for backwashing | no | yes | yes |
| Rinse water demand l/l$_r$ | 1.5 | 1.5 | 1.9 |

This Table evidences the same advantages as were evidenced in Tables I and II.

Example 4

A two-chamber ion exchange unit with an internal diameter of 200 mm, a total jacket height of 2600 mm which is separated into 2 equal sized chambers of approx. 40 l usable contents, using 3 nozzle trays, was used.

The upper chamber was filled with a total of 39 l of strong acid cation exchanger in Na-Form and the lower chamber with 38 l. The resin ionic form was changed into H-Form by treatment with 200 g HCl/l of resin.

As in Example 1 about 1.3 l of resin was transferred to the backwash column from the bottom of the upper chamber held there and returned to the bottom of the upper chamber during the loading stage.

For loading, water containing 5.5 mval/l Ca, 1.5 mval/l Mg, 1.0 mval/l Na, 4.0 mval/l HCO$_3$ at a temperature of 21.5°C was used. Throughput was 1000 l/h which corresponds to a linear flow velocity of 31.8 m/h and an exhaustion flow rate of 12.8 l/l of resin/hour. The run was stopped after throughput of 1000 l each time for 15 min. The loading phase was ended as soon as the conductivity in the outlet stream of the cation exchanger, measured after subsequent treatment with a strongly basic anion exchanger in the OH Form had reached max. 10 µS/cm.

The exchanger was upflow loaded during the exhaustion phase; during the regeneration phase the acidic regenerant as well as the rinse water were passed through the resin bed downflow. In order to check the reproducibility of the corresponding process parameters one backwash of the resin was performed during each cycle alternately backwashing resin from the upper chamber and resin from the lower chamber in alternate cycles.

The upper chamber: during the regeneration phase, after 0.9 BV rinse water had passed, 4 l of resin were transferred via the upper chamber upper resin transfer opening into the open backwash vessel and after backwashing with deionised water most of the backwashed resin was returned to the column via the same upper resin transfer opening while regeneration was still in progress. During the second half of the loading stage the resin remaining in the open backwash vessel was re-transferred into the chamber via the upper chamber lower resin transfer opening.

The lower chamber: during the regeneration phase, after 0.9 BV rinse water had passed, 8 l of resin were transferred via the lower chamber upper resin transfer opening into the open backwash vessel and after backwashing with deionised water most of the backwashed resin was returned at the beginning of the subsequent loading stage to the column, via the lower chamber lower resin transfer opening. During second half of the loading stage the remaining resin is transferred into the column via the same lower resin-transfer-opening.

The average performance values over 11 cycles were:

| | |
|---|---|
| Throughput l | 11858 |
| Useful capacity val/l$_r$ | 1.23 |
| Regeneration level g HCl/l of resin | 61 |
| Purewater quality µS/cm | 1.28 |
| Rinsewater demand l/l of resin | 1.42 |
| Quantity of backwashing upper chamber | 5 |
| Quantity of backwashing lower chamber | 5 |

These figures demonstrate that this Example gave high useful capacity, excellent pure water quality and low rinse water consumption. Furthermore it can be seen that backwash frequency had no influence on the corresponding process parameters, that the process enabled more or less independant treatment without any interruption resulting in reproducable results for each cycle and that the process enabled, over a few cycles, the backwash of the total resin volume of a chamber without process disadvantage.

Example 5 and Comparative Test D

A column, with an internal diameter of 1194 mm and a cylindric jacket height of 3.200 mm is, via 3 nozzle plates separated into 2 equal sized chambers of about 1800 l volume each.

This column is equipped with upper and lower resin transport openings in each of the two chambers and filled with a total of 3300 l of a strong acid cation exchanger. The upper chamber is completely filled, the lower one has a bed depth of about 1440 mm.

In a Comparative Test D a similar column was used, the column itself being equipped with means for resin transport between the chambers so that backwashing in the column itself is possible.

To this end a total of 2800 l of the same cation exchanger was used in the Comparative Test, the upper chamber being completely filled with the lower one filled only to a height of 800 mm. For backwashing, a space of 700 mm was available.

For loading, water from a dealkalisation and deep bed filtration plant containing on average 2.2 mval/l Ca, 3.8 mval/l Mg, 5.1 mval/l Na at a temperature of 18°C was used. The throughput between 10 m³/h and 55 m³/h which corresponds to a linear flow velocity of about 8.9 to 49.1 m/h and an exhaustion flow rate of 3.0 to 16.2 l/l in the Example and 3.6 to 19.6 l/l/hr in the Comparative Test.

Further, in both runs loading was irregular and was stopped at irregular intervals from time to time when treated water was not required. Loading was also stopped whenever the conductivity in the outlet stream of the cationic filter measured after subsequent treatment with a strongly basic anion exchanger had reached max. 10 µS/cm.

In the Example the periodical resin backwash was applied as follows:

The upper chamber: twice per 100 cycles during the regeneration phase, as soon as about 1 BV rinse water had passed, about 180 l of resin were transferred via the upper resin transfer opening and, after backwashing with deionised water most of the backwashed resin was re-transferred to the column via the same upper resin transfer opening, while the regeneration phase was still in operation. During the second half of the loading stage the remaining resin in the open backwash vessel was re-transferred into the upper chamber via the lower resin transfer opening.

The lower chamber: three times per 100 cycles at the end of the regeneration phase, as soon as about 1.5 BV rinse had passed, about 200 l of resin were transferred into the open backwash vessel via the lower resin transport opening and backwashed with deionised water.

The upper and lower chambers were not both backwashed during the same cycle.

At the beginning of the following loading stage the backwashed resin was re-transferred into the lower chamber via the same lower resin transfer openings.

In the Comparative Test a periodically necessary resin backwash had to be applied in the upper chamber and in the lower chamber with the same frequency as in Example 5. In this Comparative Test loaded resin was backwashed.

To backwash the resin in the upper chamber, the lower chamber was completely filled with resin via the corresponding resin transfer opening of the upper chamber.

The return of the resin followed during the next loading stage. Backwash of the resin in the lower chamber was done without previously transporting any of the resin out from the lower chamber.

The comparison of the performance of the 2 processes is shown below by the results of 100 cycles.

9

**0 142 359**

|  | Example 5 | Comparative Test D |
|---|---|---|
| Brut water production during 100 cycles m³ | 37846 | 30850 |
| Useful capacity val/l | 1.27 | 1.22 |
| Average pure water quality conductivity µS/cm | 1.36 | 1.48 |
| Backwash frequency lower chamber | 3 | 3 |
| Backwash frequency upper chamber | 2 | 2 |
| Interruption of working cycle due to backwashing | 0 | 5 |
| Regeneration level g HCl m³ water | 488 | 497 |
| Wash water demand l/l of resin | 1.36 | 1.92 |

These results show fundamental differences between the two processes. In the Comparative Test the water treated per cycle was lower due to the smaller resin volume, than in the Example, using the same column sizes.

To maintain a regular useful capacity with the conventional process, the quantity of the acidic regenerant had to be increased after each backwashing of the upper chamber in Comparative Test.

The conductivity behaviour in the Example was independent from the resin backwash and therefore well reproducible. In the Comparative Test the conductivity level increased after each backwash.

The rinse water demand was much lower in the Example leading to a lower production cost for pure water.

**Claims**

1. An ion exchange or adsorption process for liquid treatment involving cyclical upflow loading and downflow regeneration stages applied to a compact bed of strong electrolyte ion exchange resin (2) or of polymeric adsorbent wherein, without interrupting the cycle of loading and regeneration stages, part of the resin at or near one or other end of the bed is transferred, when in a regenerated state, into a separate container (13) wherein the resin is backwashed and the backwashed resin is then returned to the top of the bed before, and/or to the bottom of the bed during, the loading stage, resin removed from the bottom of the bed being returned to the bottom of the bed and resin removed from the top of the bed being returned to the top and/or bottom of the bed.

2. A process as claimed in Claim 1 wherein a portion of resin is removed from the top of the bed to the separate backwashing column wherein it is backwashed and from which it is returned to the top of the bed.

3. A process as claimed in Claim 2 wherein the resin removal is carried out with the liquid which is used to rinse regenerant from the bed between the regeneration and loading stages.

4. A process as claimed in Claim 1 wherein resin removed from the top of the bed to the separate backwashing column wherein it is backwashed and from which it is returned to the bottom of the bed.

5. A process as claimed in Claim 4 wherein resin removal is effected by using the rinse liquid or by the first upflowing loading liquid so that backwashing is effected and the resin returned to the bottom of the column during the loading cycle and while there is still time for this resin to play an effective role in the liquid treatment.

6. A process as claimed in any preceding claim wherein resin is taken from the top of the bed and some is returned to the top before loading begins and the remainder is returned to the bottom during loading.

7. A process as claimed in Claim 1 wherein resin is removed from the bottom of the bed to the separate backwashing column wherein it is backwashed and from which it is returned to the bottom of the bed.

8. A process as claimed in Claim 7 wherein removal is effected with rinse liquid and return of the backwashed resin is effected by using the backwashing liquid or by using liquid separately provided.

9. A process as claimed in Claim 8 wherein return of resin takes place at the beginning of the loading cycle, when upflowing loading liquid supports the bed to the point where space for the re-introduction is available, and further during the loading cycle as the resin in the column shrinks.

10. A process as claimed in any preceding claim wherein 15 to 25% of the resin in the bed by volume is removed at any one time for backwashing.

**Patentansprüche**

1. Ionenaustauscher- oder Adsorptionsverfahren für eine Flüssigkeitsbehandlung mit zyklischen Beladungsstufen mit nach oben gerichteter Strömung und Regenerierungsstufen mit nach unten

10

# 0 142 359

gerichteter Strömung, das auf ein kompaktes Bett aus einem starken Elektrolytionenaustauscherharz (2) oder einem polymeren Adsorbens angewendet wird, wobei ohne Unterbrechung des Zyklus der Beladungs- und Regenerierungsstufe ein Teil des Harzes bei oder nahe einem oder dem anderen Ende des Bettes, wenn es in einem regenerierten Zustand vorliegt, in einen getrennten Behälter (13) überführt wird, in welchem das Harz rückgewaschen wird und das rückgewaschene Harz dann erneut dem Oberteil des Bettes vor, und/oder dem Boden des Bettes während, der Beladungsstufe zugeführt wird, wobei Harz, das aus dem Boden des Bettes entfernt wird, erneut dem Boden des Bettes zugeleitet wird und Harz, das von dem Oberteil des Bettes entfernt wird, erneut dem Oberteil und/oder dem Boden des Bettes zugeführt wird.

2. Verfahren nach Anspruch 1, worin ein Teil des Harzes von dem Oberteil des Bettes zu einer getrennten Rückwaschsäule entfernt wird, in welcher es rückgewaschen wird und aus welcher es erneut dem Oberteil des Bettes zugeführt wird.

3. Verfahren nach Anspruch 2, worin die Harzentfernung mit der Flüssigkeit durchgeführt wird, die zum Spülen von Regenerierungsmittel aus dem Bett zwischen der Regenerierungs- und Beladungsstufe verwendet wird.

4. Verfahren nach Anspruch 1, worin das Harz, das aus dem Oberteil des Bettes zu der getrennten Rückwaschsäule entfernt wird, in welcher es rückgewaschen wird und aus welcher es erneut dem Boden des Bettes zugeführt wird.

5. Verfahren nach Anspruch 4, worin die Harzentfernung bewirkt wird durch Verwendung der Spülflüssigkeit oder durch die erste nach oben strömende Beladungsflüssigkeit, so daß das Rückwaschen bewirkt wird, und das Harz erneut dem Boden der Säule während des Beladungszyklus zugeleitet, wird, wobei dem Harz noch Zeit verbleibt, um eine wirksame Rolle bei der Flüssigkeitsbehandlung zu spielen.

6. Verfahren nach einem der vorhergehenden Ansprüche, worin Harz von dem Oberteil des Bettes entnommen wird und ein Teil dem Oberteil zugeführt wird, bevor die Beladung beginnt, und der Rest dem Boden während der Beladung zugeführt wird.

7. Verfahren nach Anspruch 1, worin Harz von dem Boden des Bettes in die getrennte Rückwaschsäule abgeführt wird, wo es rückgewaschen wird und von welcher es erneut dem Boden des Bettes zugeleitet wird.

8. Verfahren nach Anspruch 7, worin die Entfernung durchgeführt wird, mit einer Spülflüssigkeit und die Rückführung des rückgewaschenen Harzes bewirkt wird durch Verwendung der Rückwaschflüssigkeit oder unter Verwendung von einer getrennt zur Verfügung gestellter Flüssigkeit.

9. Verfahren nach Anspruch 8, worin die Rückführung des Harzes zu Beginn des Beladungszyklus erfolgt, wenn die nach oben strömende Beladungsflüssigkeit das Bett bis zu dem Punkt trägt, an welchem Raum für eine erneute Einführung verfügbar ist, sowie weiter während des Beladungszyklus, wenn das Harz in der Säule schrumpft.

10. Verfahren nach einem der vorhergehenden Ansprüche, worin 15 bis 25% des Harzes in dem Bett, bezogen auf das Volumen, zu irgendeinem beliebigen Zeitpunkt zum Rückwaschen entfernt werden.

**Revendications**

1. Un procédé d'échange d'ions ou d'adsorption pour le traitement d'un liquide comprenant des stades cycliques de charge en courant ascendant et de régénération en courant descendant appliqués à un lit compact d'une résine échangeuse d'ions fortement électrolytique (2) ou d'un adsorbant polymère, dans lequel, sans interruption du cycle des stades de charge et de régénération, une partie de la résine à l'une ou l'autre extrémité du lit ou à leur voisinage est transférée, sous une forme régénérée, dans un récipient séparé (13) dans lequel la résine est lavée en retour et la résine lavée en retour est ensuite renvoyée à la partie supérieure du lit avant, et à la partie inférieure du lit pendant, le stade de charge, la résine prélevée de la partie inférieure du lit étant renvoyée à la partie inférieure du lit et la résine prélevée de la partie supérieure du lit étant renvoyée à la partie supérieure et/ou la partie inférieure du lit.

2. Un procédé comme revendiqué dans la revendication 1, dans lequel une portion de la résine est prélevée de la partie supérieure du lit pour être conduite dans une colonne séparée de lavage en retour dans laquelle elle est lavée en retour et à partir de laquelle elle est renvoyée à la partie supérieure du lit.

3. Un procédé comme revendiqué dans la revendication 2, dans lequel le prélèvement de la résine est effectué avec le liquide qui est utilisé pour rincer le régénérant du lit entre les stades de régénération et de charge.

4. Un procédé comme revendiqué dans la revendication 1, dans lequel la résine est prélevée à la partie supérieure du lit pour être conduite dans la colonne séparée de lavage en retour dans laquelle elle est lavée en retour et à partir de laquelle elle est renvoyée à la partie inférieure du lit.

5. Un procédé comme revendiqué dans la revendication 4, dans lequel le prélèvement de la résine est effectué par utilisation du liquide de rinçage ou par le premier liquide de charge en courant ascendant, si bien que le lavage en retour est effectué et la résine est renvoyée à la partie inférieure de la colonne pendant le cycle de charge et alors que cette résine a encore le temps de jouer un rôle efficace dans le traitement du liquide.

6. Un procédé comme revendiqué dans l'une quelconque des revendications précédentes, dans lequel la résine est prélevée à la partie supérieure du lit et une partie en est retournée à la partie supérieure avant que la charge commence et le reste est retourné à la partie inférieure pendant la charge.

7. Un procédé comme revendiqué dans la revendication 1, dans lequel la résine est prélevée à la partie inférieure du lit pour être conduite à la colonne séparée de lavage en retour dans laquelle elle est lavée en retour et à partir de laquelle elle est renvoyée à la partie inférieure du lit.

8. Un procédé comme revendiqué dans la revendication 7, dans lequel le prélèvement est effectué avec le liquide de rinçage et le retour de la résine lavée en retour est effectué par utilisation du liquide de lavage en retour ou par utilisation d'un liquide fourni séparément.

9. Un procédé comme revendiqué dans la revendication 8, dans lequel le retour de la résine s'effectue au début du cycle de charge, alors que le liquide de charge en courant ascendant soutient le lit au point qu'il existe en espace disponible pour la réintroduction et de plus pendant le cycle de charge, alors que la résine dans la colonne se rétracte.

10. Un procédé comme revendiqué dans l'une quelconque des revendications précédentes, dans lequel 15 à 25% en volume de la résine dans le lit sont prélevés à tout moment pour le lavage en retour.